**Europäisches Patentamt**

**European Patent Office**

**Office européen des brevets**

(19)

(11) Veröffentlichungsnummer: **0 116 685**
**A1**

(12) # EUROPÄISCHE PATENTANMELDUNG

(21) Anmeldenummer: 83109651.6

(22) Anmeldetag: 28.09.83

(51) Int. Cl.³: **G 01 M 11/08**
**B 29 D 3/02**

(30) Priorität: 20.11.82 DE 3243026
10.05.83 DE 3317051

(43) Veröffentlichungstag der Anmeldung:
29.08.84 Patentblatt 84/35

(84) Benannte Vertragsstaaten:
FR GB SE

(71) Anmelder: Messerschmitt-Bölkow-Blohm GmbH
Hünefeldstrasse 1-5
D-2800 Bremen 1(DE)

(72) Erfinder: Malek, Samir, Dr.
Auf der Koppel 20
D-2822 Schwanewede-Leuchtenburg(DE)

(72) Erfinder: Hofer, Bernd, Dr.
Osnabrücker Strasse 11
D-2874 Lemwerder(DE)

(74) Vertreter: Schramm, Ewald Werner Josef
Messerschmitt-Bölkow-Blohm GmbH Patentabteilung
TW63 (TWB32) Postfach 10 78 45
D-2800 Bremen 1(DE)

(54) Optische Messanordnung zum Feststellen von Rissen.

(57) Die Erfindung bezieht sich auf eine Meßanordnung zum Feststellen von Rissen in Prüflingen. In aus Kunststoff bestehende Prüflinge werden neben Fasern zur Festigkeitssteigerung Lichtleitfasern verlegt, die zur Auslösung einer Rißanzeige dienen und eine Verlegungskontrolle der Fasern beim Durchleuchten mit intensivem Licht durch den Kunststoff ermöglichen.

EP 0 116 685 A1

Croydon Printing Company Ltd.

Die Erfindung bezieht sich auf eine Meßanordnung zum Feststellen von Rissen in Prüflingen mit einem zur Auslösung einer Rißanzeige dienenden und am Prüfling angebrachten Rißdetektor, der aus mit Licht versorgbaren in einen aus Kunststoff bestehenden Prüfling eingelegten Lichtleitfasern besteht.

Bei der zuvor angegebenen Meßanordnung werden die Lichtleitfasern, z. B. Kunststoffasern, Glasfasern oder Quarzfasern, in einen aus Kunststoff bestehenden Prüfling integriert. Mittels eines Lichteinkopplers kann diesen Lichtleitfasern Licht zugeführt werden, deren Transmission an den anderen Enden überwacht wird. Ein in einer Lichtleitfaser aufgrund eines Risses entstandener Bruch reduziert die Lichttransmission sehr stark und hat daher zur Folge, daß der Lichtdetektor dieser Faser hierauf anspricht und ein Signal zur Auslösung einer Rißanzeige erzeugt. Von besonderem Vorteil ist hierbei die Tatsache, daß sich durch die Einbettung der Lichtleitfasern in den aus Kunststoff bestehenden Prüfling eine hohe Nachweisempfindlichkeit ergibt und daß Korrosionsprobleme nicht entstehen können. Außerdem haben derartige Rißdetektoren den Vorteil, irreversibel zu sein, das heißt, entstandene und angezeigte Risse werden auch nach Entlastung der Prüflinge weiter angezeigt.

Neben der Rißüberwachung derartiger, mit Lichtleitfasern versehener Kunststoffteile ist es auch wichtig, die Herstellung solcher Kunststoffteile zu überwachen. Es kann nicht ausgeschlossen werden, daß die Lichtleitfasern bei der Herstellung beschädigt oder unvorschriftsmäßig verlegt werden. Daher ist es sehr notwendig, vor dem Einsatz Gewißheit über den einwandfreien Zustand so hergestellter Kunststoffteile zu erhalten.

Der Erfindung liegt daher die Aufgabe zugrunde, eine zuverlässige Fertigungskontrolle für die mit Lichtleitfasern versehenen Kunststoffteile vorzusehen. Diese Aufgabe ist erfindungsgemäß dadurch gelöst, daß lichtleitende Glasfasern, die bei der Herstellung faserverstärkter Kunststoffe zwischen den einzelnen Laminatschichten verlegt sind und nach Aushärten des Kunststoffes eine sichtbare Anzeige des Fasergefüges beim Durchleuchten der Fasern mit intensivem Licht darstellen.

Die erfindungsgemäße Maßnahme hat den Vorteil, die zur Rißerfassung eingesetzten Glasfasern gleichzeitig für eine Verlegungskontrolle der hergestellten faserverstärkten Kunststoffe zu benutzen. Bei der Herstellung der Kunststoffteile lassen sich die lichtleitenden Glasfasern z. B. in Gitterform zwischen den Laminatschichten verlegen, so daß sich beim Durchleuchten eine sichtbare Anzeige von außen über den Verlauf der Fasern ergibt. Eventuell beim Pressen entstandene Verschiebungen oder Deformationen des Fasergefüges können auf diese Weise zusätzlich mit den zur Auslösung einer Rißanzeige eingelegten lichtleitenden Fasern sichtbar gemacht werden. Bei der Herstellung faserverstärkter Kunststoffe ist es zweckmäßig, vorgefertigtes, zur Steigerung der Festigkeit vorgesehenes Fasermaterial (Glasfaser, Kohlenstoffaser), und zwar sogenanntes "Prepreg-Material" mit lichtleitenden Fasern zu durchsetzen.

Das Durchleuchten der verlegten Lichtleitfasern wird mit intensivem Licht, vorzugsweise mit Laserlicht, vorgenommen, so daß die verlegten Lichtleitfasern durch das Kunststoffteil sichtbar werden und eine Kontrolle für derartig hergestellte Bauteile ermöglichen.

Vorteilhaft ist es weiterhin, die Oberfläche der Lichtleitfasern durch eine Aufrauhung mit einer wesentlich besseren Haftwirkung gegenüber ihrer Einbettung zu versehen. Außerdem ergeben sich durch eine Aufrauhung der Lichtleitfasern mikroskopische Kerben in der Oberfläche der Lichtleitfasern, welche die Bruchdehnung dieser Fasern herabsetzen und damit die Nachweisempfindlichkeit des Sensors für Risse steigert.

Die Behandlung der Lichtleitfasern zur Oberflächenaufrauhung kann mit Glasätztinte oder anderen, die Fasern angreifenden chemischen Ätzflüssigkeiten erfolgen. Weiterhin ist es zweckmäßig, die Lichtleitfasern nach ihrer Aufrauhung an Teilstücken mit Kunstharz zu ummanteln. Hierdurch ergibt sich für die Fasern eine Schutzhülle, welche eine Verlegung der Fasern um Kanten oder Ecken ermöglicht. Auf die als Rißsensor wirkenden Teile der Lichtleitfasern wird eine Ummantelung nicht aufgebracht. Die Aufrauhung der Lichtleitfasern zur Verbesserung der Haftwirkung und zur Erhöhung der Nachweisempfindlichkeit des Rißsensors kann auch abschnittsweise, und zwar nur auf den im Sensorgebiet zu verlegenden Lichtleitfasern, erfolgen. Dies ist z. B. durch Versehen der Lichtleitfasern mit gegen die Ätzflüssigkeit resistenten Schutzhüllen möglich, so daß lediglich die als Rißsensor wirkenden, keine Schutzhülle aufweisenden Abschnitte aufgerauht werden. Die so aufbereiteten Lichtleitfasern lassen sich mit den gleichen Vorteilen auch als Rißsensoren auf Oberflächen von Prüflingen aus Kunststoff, Metall oder sonstigen Werkstoffen aufbringen.

BEZE... .... ...ÄNDERT.
siehe T...seite

8223-44

Bremen, den 26. Sept. 1983
TWB32/Sm/Bw

MESSERSCHMITT - BÖLKOW - BLOHM GmbH

Meßanordnung zum Feststellen von Rissen

## PATENTANSPRÜCHE

1.                    Meßanordnung zum Feststellen von Rissen in Prüflingen mit einem zur Auslösung einer Rißanzeige dienenden und am Prüfling angebrachten Rißdetektor, der aus mit Licht versorgbaren, in einen aus Kunststoff bestehenden Prüfling eingelegten Lichtleitfasern besteht, dadurch gekennzeichnet, daß lichtleitende Glasfasern bei der Herstellung faserverstärkter Kunststoffe zwischen den einzelnen Laminatschichten verlegt sind und nach Aushärten des Kunststoffes eine sichtbare Anzeige des Fasergefüges beim Durchleuchten der Fasern mit intensivem Licht darstellen.

2.            Meßanordnung nach Anspruch 1, dadurch gekennzeichnet, daß die lichtleitenden Glasfasern in gitterförmiger Anordnung verlegt sind.

3.            Meßanordnung nach Anspruch 1, dadurch gekennzeichnet, daß für das intensive Licht Laserlicht benutzt wird.

4.            Meßanordnung nach einem der Ansprüche 1 bis 3, dadurch gekennzeichnet, daß vorgefertigtes, zur Steigerung der Festigkeit vorgesehenes Fasermaterial, Glas, Kohle usw. mit lichtleitenden Fasern zur Verlegungskontrolle und/oder zur Rißerfassung durchsetzt ist.

5.            Meßanordnung nach einem der Ansprüche 1 bis 4, dadurch gekennzeichnet, daß die Lichtleitfasern vor dem Einlegen in den Prüfling mit einer Ätzflüssigkeit zur Aufrauhung behandelt sind.

6.            Meßanordnung nach Anspruch 5, dadurch gekennzeichnet, daß die mit der Ätzflüssigkeit aufgerauhten Lichtleitfasern teilweise mit einer Kunstharzhülle ummantelt sind.

7.            Meßanordnung nach Anspruch 5 oder 6, dadurch gekennzeichnet, daß für die Ätzflüssigkeit zum Aufrauhen der Lichtleitfasern Glasätztinte benutzt wird.

0116685

Nummer der Anmeldung

EP  83 10 9651

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | GB-A-2 036 336  (THE BRITISH PETROLEUM CO. LTD.) <br> * Insgesamt * | 1-4 | G 01 M  11/08 <br> B 29 D   3/02 |
| Y | EP-A-0 038 401  (FELTEN & GUILLEAUME CARLSWERK AG) <br> *  Zusammenfassung;  Seite  4, Zeilen 29-34; Seite 5, Zeilen 25-30; Figuren * | 1-4 | |

| RECHERCHIERTE SACHGEBIETE (Int. Cl. ³) |
|---|
| G 01 M  11 <br> G 01 L   1 <br> G 01 B  11 <br> G 08 B  13 |

Der vorliegende Recherchenbericht wurde für alle Patentansprüche erstellt.

| Recherchenort <br> DEN HAAG | Abschlußdatum der Recherche <br> 21-05-1984 | Prüfer <br> VAN ASSCHE P.O. |
|---|---|---|